# EUROPEAN PATENT SPECIFICATION

(11) **EP 2 256 993 B1**
(45) Date of publication and mention of the grant of the patent: **18.01.2012**
(21) Application number: 10163964.9
(22) Date of filing: 26.05.2010
(51) Int. Cl.: H04L 12/40, H04W 74/08

(54) **Method for accessing a communication channel for communication networks**
Verfahren für den Zugang auf einen Kommunikationskanal für Kommunikationsnetzwerke
Procédé pour accéder à un canal de communication pour des réseaux de communication

(30) Priority: 29.05.2009 IT TO20090413
(43) Date of publication of application: 01.12.2010
(73) Proprietor: Istituto superiore Mario Boella sulle Tecnologie dell'Informazione e delle Telecomunicazioni, 10138 Torino (IT)
(72) Inventor: Scopigno, Riccardo, 15060, VIGNOLE BORBERA (IT); Cozzetti, Hector Agustin, 13836, COSSATO (IT)
(74) Representative: Camolese, Marco

(56) References cited:
- LUCA CAMPELLI ET AL: "Reuse Efficiency of Point-To-Point Connections in Ad Hoc Networks" GLOBAL TELECOMMUNICATIONS CONFERENCE, 2007. GLOBECOM '07. IEEE, IEEE, PISCATAWAY, NJ, USA, 1 November 2007 (2007-11-01), pages 4494-4499, XP031196782 ISBN: 978-1-4244-1042-2
- BORGONOVO F ET AL: "ADHOC MAC: New MAC Architecture for Ad Hoc Networks Providing Efficient and Reliable Point-to-Point and Broadcast Services" WIRELESS NETWORKS ; THE JOURNAL OF MOBILE COMMUNICATION, COMPUTATION AND INFORMATION, KLUWER ACADEMIC PUBLISHERS, DO, vol. 10, no. 4, 1 July 2004 (2004-07-01), pages 359-366, XP019216698 ISSN: 1572-8196
- Chenzi Zhu et al: "A five-phase reservation protocol (FPRP) for mobile ad hoc networks" In: "Wireless Networks" 1 January 2001 (2001-01-01), Kluwer Academic Publishers , Netherlands , XP002566737 vol. 7, , pages 371-384 * paragraphs [0001], [0002] *
- IEEE 802.11 Working Group: "IEEE P802.11P D6.01 Part 11: Wireless LAN Medium Access Control (MAC) and Physical Layer (PHY) specifications Amendment 7" IEEE-SA 24 April 2009 (2009-04-24), XP002566738 Retrieved from the Internet: URL:http://www.ieee802.org/11/private/Draf t_Standards/11p/Draft%20P802.11p_D6.01.pdf [retrieved on 2010-02-03]

## Description

The present invention regards a method for accessing a communication channel for wireless-communication networks.

As is known, given a communication network formed by a plurality of nodes, and given a physical medium that connects said nodes to one another to define a communication channel with a certain capacity, so-called "channel-access protocols" are today available, i.e., protocols that enable the nodes to communicate with one another through the communication channel, sharing the capacity thereof, even in the case where the nodes move about in space.

In compliance with the known layer model of the International Standard Organization - Open Systems Interconnection (ISO-OSI model), said channel-access protocols belong to the so-called "data-link layer", also referred to as "Media Access Control (MAC) layer" or "layer two". Since they come under the so-called MAC layer, channel-access protocols are also referred to, for brevity, as "MAC protocols".

In greater detail, in order to communicate, the nodes access the communication channel, i.e., transmit signals (typically electrical or electromagnetic signals) through the communication channel. Said signals convey information, the elementary unit of information transmitted at the MAC level by an individual node being generally known as "frame". Channel-access protocols envisage control of the accesses of the nodes, in order to optimize the exploitation of the capacity of the communication channel, and reduce the likelihood of collision, i.e., interference between signals transmitted by different nodes.

As regards in particular wireless-communication networks, the so-called Carrier Sense Multiple Access/Collision Avoidance (CSMA/CA) protocol is for example known, which is used, amongst other things, by the standards of the IEEE 802.11 family, commonly known as Wi-Fi standards.

The CSMA/CA protocol envisages that each node, before transmitting, verifies the state of the communication channel, i.e., checks that no transmissions are in progress by other nodes of the network, and transmits only in the case where the communication channel is free. In the case where the channel is, instead, occupied, i.e., when the channel is used by another node, the node waits for a time of random duration, known as "backoff time", before verifying again the state of the communication channel, and, in the case where the communication channel is finally free, transmitting.

The CSMA/CA protocol moreover envisages that, following upon the reception by a receiver node of a frame sent by a sender node, the receiver node will sends a frame to acknowledge reception, known as "ACK frame".

In the case where the sender node receives the ACK frame, it considers the frame sent previously as having been correctly received by the receiver node.

Instead, if the sender node does not receive the ACK frame, it deduces that a collision has occurred. In this case, after waiting a new backoff time, it verifies the state of the communication channel and repeats, in case where the communication channel is free, transmission of the frame sent previously.

The CSMA/CA protocol has met with a considerable success in the field of wireless communications, in particular on account of the excellent exploitation of the communication channel in the case of a network that is substantially free, i.e., in the case of a network in which the traffic exchanged, i.e., the set of information exchanged by the nodes, is far less than the capacity of the communication channel. However, in the presence of intense traffic, and hence in the case of the network being congested, it happens that the nodes must wait considerably long times before accessing the communication channel, i.e., before transmitting; this renders the CSMA/CA protocol far from scalable. In addition, given that there are not envisaged mechanisms of reservation of access to the communication channel, it is not possible to guarantee the so-called "quality of service" (QoS).

A possible alternative to the CSMA/CA protocol is represented by the protocol described in "A five-phase reservation protocol (FPRP) for mobile ad hoc networks", "Wireless Networks", January 1, 2001, Kluwer Academic Publishers, Netherlands, vol. 7, pp. 371-384, by Chenzi Zhu *et al*. In particular, the protocol proposed therein envisages steps of assignment of slots to nodes of the network. However, even though this, in principle, is able to guarantee a certain quality of service, said protocol is optimal for scenarios in which, during the assignment steps, the network topology remains fixed. Instead, in the case where, during the assignment steps, one or more nodes enter the network or the exit therefrom, statistically there occurs a deterioration of the levels of performance of said protocol.

In order to overcome the drawbacks described, and in particular in order to guarantee a quality of service less dependent upon the behaviour (entry/exit, transmission, etc.) of the nodes of the network, the protocol known as "RR-Aloha" has been proposed, described in detail in Wireless Networks 10, 359-366, 2004, published in Holland by Kluwer Academic Publishers. The RR-Aloha protocol is likewise mentioned in "Reuse Efficiency of Point-to-Point Connections in Ad Hoc Networks", GLOBAL TELECOMMUNICATIONS CONFERENCE, 2007, GLOBECOM '07, IEEE, PISCATAWAY, NJ, USA, November 1, 2007, pp. 4494-4499, by L. Campedelli *et al*., where it is described with particular reference to communications of a point-to-point type within fixed networks. In addition, the RR-Aloha protocol is also mentioned in "ADHOC MAC: New MAC Architecture for Ad Hoc Networks Providing Efficient and Reliable Point-to-Point and Broadcast Services", WIRELESS NETWORKS, THE JOURNAL OF MOBILE COMMUNICATION, COMPUTATION AND INFORMATION, KLUWER ACADEMIC PUBLISHERS, DO, vol. 10, no. 4, July 1, 2004, pp. 359-366 by F. Borgonovo *et al*.

In detail, the RR-Aloha protocol envisages that the nodes of the network present respective MAC addresses and are to a first approximation synchronized (for example, by means using the global-positioning system - GPS). In addition, the RR-Aloha protocol envisages that the communication channel is of the type divided into elementary time intervals, i.e., is of the so-called "time slotted" type.

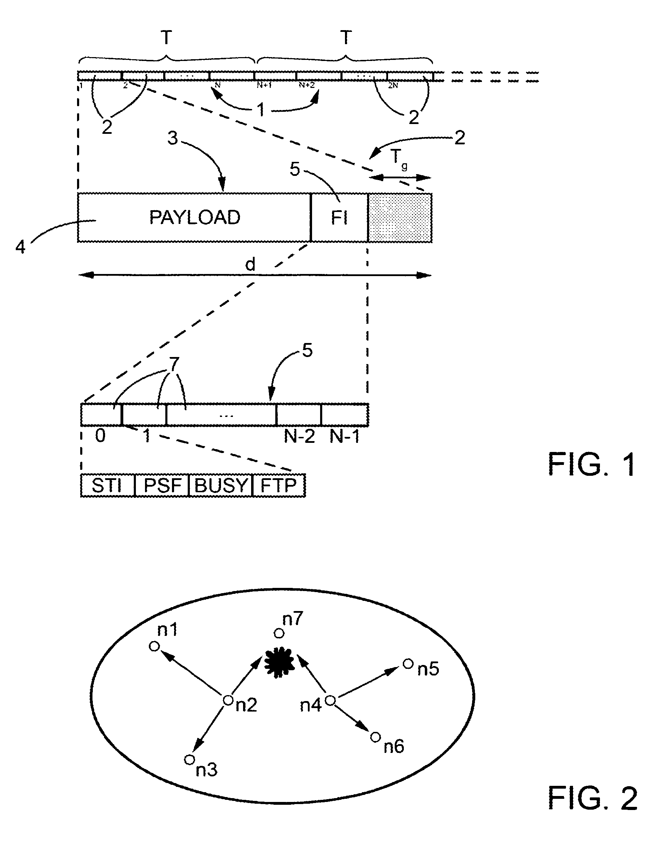

As shown in greater detail in Figure 1, the RR-Aloha protocol envisages dividing the time into cycles with period T. Each cycle contains a frame 1, which is in turn divided into a number N of consecutive slots 2 of equal duration d, within which the nodes of the network can transmit. In particular, the information transmitted in a single slot is commonly referred to as "subframe 3".

As shown once again in Figure 1, the duration d of the slot 2 is such that, within a single slot 2, a single subframe 3 can be transmitted. In particular, considering a geographical area of the communication network and the maximum propagation times used by the signals for propagating through said geographical area, the duration d is such that within a single slot 2 it is possible to transmit, by a sender node, a single subframe 3, it being possible for said subframe 3 to be received by any other node of the network within said slot 2.

In addition, the RR-Aloha protocol envisages that each subframe 3 comprises a payload portion 4, which contains layer-two information, such as for example a sequence number, a source MAC address, a destination MAC address, a fragment number, and a CRC code. In addition, typically the payload portion 4 contains possible layer-one information associated to the communication channel. Each subframe 3 further comprises an additional portion, which is referred to in what follows as "frame-information (FI) vector" 5, described in detail hereinafter. It is likewise envisaged that the subframes 3 have a duration shorter than the duration d of the slots 2, in such a way that each slot 2 further comprises a guard time T_{g}.

Within a frame, each node can transmit in one or more slots 2. The RR-Aloha protocol operates in such a way as to prevent, as far as possible, two different nodes from colliding when they transmit in one and the same slot 2. For practical purposes, the RR-Aloha protocol envisages association to each node of at least one respective transmission slot from among the aforementioned N slots 2, within which the node can transmit.

In order to determine the associations between nodes and respective transmission slots in such a way as to prevent collisions, each node keeps in memory, at each slot, the states of the N previous slots, it being possible for each of said states to be, alternatively, free or occupied by a node. In what follows, for brevity the slots will be said to be free or occupied, where it is understood that "free" and "occupied" refer to the states of the slots. In addition, it is also said that a node considers a slot occupied or free to indicate that the node has in memory a state regarding said slot, and said state is occupied or free.

When a node accesses a given slot, i.e., transmits a subframe, it enters in said subframe the states of the N-1 slots that precede the given slot, as stored thereby, in addition to the state of the given slot itself, labelled as being occupied. In the case of occupied slots, the node enters in the subframe also corresponding identifiers of the nodes that have occupied said slots. For example, present in each subframe are an indication regarding the fact that the slot in which the subframe itself has been transmitted is occupied, and an identifier of the node that has transmitted the subframe.

In general, given a succession of frames, and hence of slots, it is possible to establish a correspondence between said slots and N slots of an archetype frame (not shown), which in what follows are referred to as "archetype slots". In fact, in general, a k-th slot k of the succession of slots corresponds to an archetype slot k *mod* N of the archetype frame; for example, assuming N equal to ten, slot one and slot eleven both correspond to the archetype slot one. Consequently, entering in a subframe the states of the slot in which the subframe is transmitted and of the N-1 previous slots means entering the states of each of the archetype slots that form the archetype frame. In other words, irrespective of the number of frames that have effectively elapsed, each subframe contains the states of the N archetype slots, as stored at the moment of transmission by the node that has transmitted the subframe.

In particular, for transmitting the states of the slots as determined thereby, the nodes resort to the aforementioned FI vectors 5.

As shown in detail once again in Figure 1, given a sender node that transmits a subframe in a certain slot, the FI vector 5 of said subframe comprises a number of fields 7 equal to the number of slots present in a frame, in the case in point equal to N. Each field 7 regards a corresponding slot (and hence, a corresponding archetype slot), which precedes the aforementioned certain slot, and contains: a source temporary identifier (STI), formed by eight bits, which in what follows will be referred to also as STI; a priority identifier formed by two bits, also known as priority-status field (PSF); an occupation identifier, also known as BUSY identifier, which is formed by one bit and is a function of the state of the corresponding slot, as stored by the sender node; and a point-to-point transmission identifier, formed by one bit and known as FTP identifier.

In greater detail, given a field 7, the BUSY identifier is set at "1" if the sender node considers the corresponding slot occupied, i.e., it has stored for the corresponding slot an occupied state; otherwise it is set at "0". In addition, in the case where the corresponding slot is occupied, the source temporary identifier identifies the node that has occupied said slot. For brevity, it is also said that a FI vector indicates a slot as occupied by a node to indicate the case where the field of said FI vector that corresponds to said slot presents the BUSY identifier equal to "1" and the source temporary identifier that identifies said node.

As compared to the MAC addresses (formed by 6 bytes), the use of a source temporary identifiers formed by just eight bits enables reduction of the overhead associated to the FI vectors; however, the temporary identifiers can assume usually two hundred and fifty-six different values; there is consequently the risk that different nodes are associated to one and the same source temporary identifier.

As regards storage of the states of the slots by the nodes, the RR-Aloha protocol is such that, considering for example a node and the slot k, the node considered has in memory, before said slot k starts, the states of the N slots that have preceded the slot k. In particular, given an n-th slot n from among the aforementioned N slots that have preceded the slot k, the state of said slot n is occupied in the following cases:
- the node considered has transmitted a subframe in the slot n, and in the slots comprised between the slot n (excluded) and the slot k (excluded) possible subframes received by the node considered confirm occupation of the slot n by the node considered; i.e., they present FI vectors the fields of which corresponding to the slot n present the BUSY identifier equal to "1" and the source temporary identifier that identifies the node considered;
- the node considered has received in the slot n a subframe transmitted by another node, and in the slots comprised between the slot n (excluded) and the slot k (excluded) any possible subframes received by the node considered confirm occupation of the slot n by said other node; i.e., they present FI vectors the fields of which corresponding to the slot n present the BUSY identifier equal to "1" and the source temporary identifier that identifies the aforementioned other node.

In all the other cases, the state of said slot is free.

The states of the N slots that have preceded the slot k regard the node considered; in other words, assuming as hypothesis that the node considered has determined the state of a slot n, for example as occupied, for instance because during the slot n it has received the transmission of a certain node, it is possible for a node different from the node considered to have determined the state of the slot n as free, for instance because, having moved away from the certain node, during the slot n it has not received any signal. For brevity, in what follows, the slots will be also said to be considered free or occupied by a given node, where it is understood that "free" and "occupied" refer to the corresponding states as stored by the given node.

On the basis of what has been described, the nodes propagate within the network the information that they have available for the states of the slots, said information being contained, precisely, in the FI vectors. In addition, the nodes determine whether to access a slot or otherwise according to the FI vectors contained in the subframes received from other nodes.

In greater detail, considering again the k-th slot k of a given frame, and a node that intends to transmit and has not yet transmitted in any slot of the given frame, the node determines whether to transmit or otherwise in said slot k according to the FI vectors present in the subframes possibly received in the N slots that have preceded the slot k.

In particular, the node considers the slot k as reserved, and hence does not transmit in said slot, in the case where the node has received, in the slots comprised between the slot k-N (included) and the slot k-1 (included), at least one subframe in which the BUSY identifier of the field corresponding to the slot k-N was equal to "1". Otherwise, the node considers the slot k as accessible and accesses it with a certain likelihood.

In the case where the node does not access the slot k effectively, in the slot k+1 it repeats the operations described. Instead, in the case where the node transmits effectively a subframe in the slot k, it selects as its own source temporary identifier, i.e., as source temporary identifier that is entered in the field of the FI vector that corresponds to the slot k itself, a value comprised between zero and two hundred and fifty-five and not yet used by nodes that have carried out transmissions in the N slots preceding the slot k. As regards, instead, the source temporary identifiers that are possibly entered in the other fields, they are equal to the same source temporary identifies present in the subframes previously received by the node, and in particular present in the fields corresponding to the slots in which said subframes have been transmitted.

After transmission, the aforementioned node must wait a frame before acknowledgement of correctness of the transmission itself. In fact, in order to establish whether the transmission has been carried out properly or otherwise, the node verifies that all the subframes that it receives during the N-1 slots subsequent to the slot k present FI vectors in which the BUSY identifier of the field corresponding to the slot k is equal to "1", and in which the source temporary identifier indicates the node itself. If this occurs, the node receives acknowledgement of correct transmission, and may continue to transmit in the slots k+iN, with i=1,2, ..., duly taking into account the need to repeat at each transmission the verifications referred to above. Otherwise, the transmission is considered as having failed, in so far as a collision is detected in the slot k; the operations described are then iterated.

The RR-Aloha protocol hence enables implementation of a mechanism of reservation of access to the communication channel, without the need to resort to a decision-making node, i.e., a node that associates in a unique way to each node of the network a respective slot in which to transmit. The reservation is in fact obtained in a distributed way over the nodes of the network.

The RR-Aloha protocol has proven effective in numerous situations, and in particular in the case of single-cluster networks, i.e., in the case of networks formed by a number of nodes all connected together, in which the transmission of a single node is received by all the other nodes. However, there exist fields of application in which the use of the RR-Aloha protocol is subject to potential drawbacks, such as, for example, in the case of networks the nodes of which present a high mobility, or else networks in which there occur frequent entries and exists of nodes into/from the networks themselves, i.e., networks in which not all the nodes are interconnected. Examples of said networks are represented by the so-called "vehicular *ad hoc* networks" (VANETs).

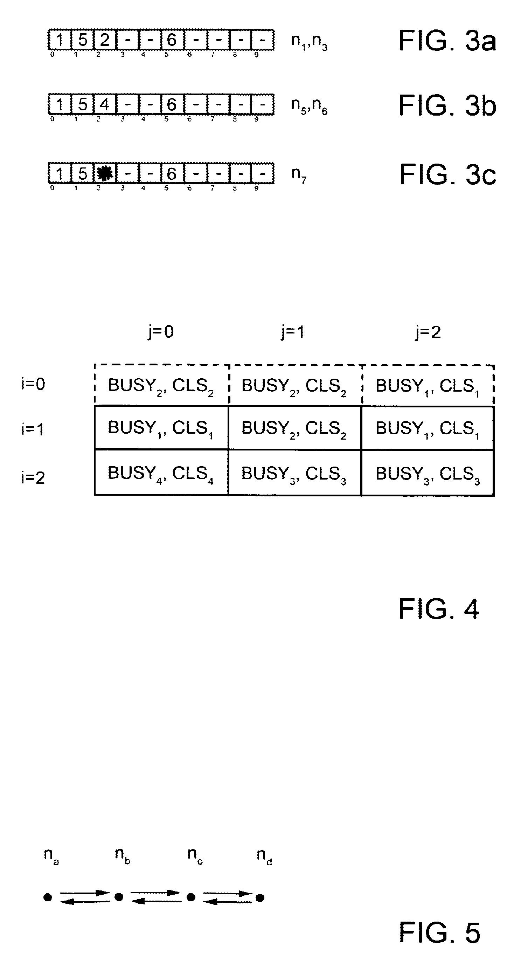

A situation in which the RR-Aloha protocol can generate malfunctioning is given, purely by way example, by the communication network shown in Figure 2, formed by seven nodes, identified respectively by n1-n7; the number of slots N per cycle is assumed as being equal to ten. In addition, as shown in Figures 3a-3c, which illustrate in schematic form the states of the N slots stored, respectively, by the nodes n1 and n3 (Figure 3a), n5 and n6 (Figure 3b) and n7 (Figure 3c), it is assumed that the node n1 has transmitted in slot zero (it is conventionally assumed that the slots are numbered from zero to nine), and that the node n5 has transmitted in slot one. As shown again in Figure 2, it is moreover assumed that, during slot two, both the node n2 and the node n4 transmit respective subframes. It is moreover assumed that the subframe transmitted by the node n2 will be received by just the nodes n1 and n3, for example on account of phenomena of attenuation of the signals, and that the subframe transmitted by the node n4 will be received by just the nodes n5 and n6. It is moreover assumed that, on account of the interference between the subframe transmitted by the node n2 and the subframe transmitted by the node n4, the node n7 does not detect any subframe.

In said situation, the nodes n1 and n3 consider slot two as occupied by the node n2, whilst the nodes n5 and n6 consider slot two as occupied by the node n4. As regards, instead, the node n7, it does not detect any transmission; consequently, the node n7 takes it that it has not received any subframe in slot two, and hence considers slot two free.

As shown again in Figures 3a-3c, in slots three and four no node transmits. Next, the node n6 transmits in slot five, and the subframe transmitted by the node n6 is received by all the other nodes of the network. In said subframe, the FI vector indicates, amongst other things, that slot two is occupied by the node n4. It follows that the nodes n4, n5, n6 and n7 receive confirmation of the fact that slot two is occupied by the node n4.

Instead, the nodes n1 and n3, in addition to the node n2, detect a collision in slot two, and consequently, in compliance with the RR-Aloha protocol, consider slot two as free. There hence follows an asymmetry of the states of the slots stored by the nodes of the network. In addition, as soon as the aforementioned nodes n1, n2 and n3 send a new subframe, there is a propagation of an incorrect information regarding the state of slot two.

A further situation in which the RR-Aloha protocol can generate malfunctioning is represented, as has been said previously, by networks in which there occur frequent entries and exists of nodes into/from the networks themselves. In this connection, we assume for simplicity a frame formed by three slots, and we moreover assume a network (not shown) formed by a first node, which transmits in a first slot, and a second node, which transmits in a second slot. In the case where a third node enters the network concomitantly with a third slot, and hence after the first and second nodes have performed their transmissions, said third node has not received the subframes transmitted by the first and second nodes. Consequently, assuming that the third node transmits, precisely, in the third slot, the subframe transmitted thereby has a FI vector in which the first and second, slots are indicated was free. When the first and second nodes receive said subframe, they obtain incorrect information therefrom, which will then be propagated.

The aim of the present invention is to provide a method for accessing a communication channel for communication networks that will overcome at least in part the drawbacks of the known art.

According to the invention, a method for accessing a communication channel, a node for a communication network, a communication network, and a software product are provided, as defined in Claims 1, 10, 11 and 13, respectively.

For a better understanding of the invention, embodiments thereof are now described, purely by way of non-limiting example and with reference to the attached drawings, wherein:
- Figure 1 is a schematic illustration of a succession of frames, a slot, a FI vector, and a field of the FI vector;
- Figure 2 shows an example of communication network;
- Figures 3a-3c are schematic and qualitative illustrations of frame information transmitted by nodes of the communication network shown in Figure 2 ;
- Figure 4 is a qualitative illustration of a data structure; and
- Figure 5 shows a further example of communication network.

The present method for accessing a communication channel represents a sort of improved RR-Aloha protocol, where the nodes, which are mobile in space, detect the collisions slot by slot, on the basis of what has been detected by them and of the FI vectors of subframes transmitted by other nodes.

A possible embodiment of the present method envisages entering within the fields of the FI vectors, instead of the aforementioned BUSY identifier (BUSY bit), state indications each formed by at least two bits, as described hereinafter. In particular, in what follows, the present method is described with reference to the case where each state indication is formed by two bits, which hereinafter are referred to as BUSY bit and CLS bit. In this way, it is possible to detect collisions both by comparison of different FI vectors and by an explicit warning of collision contained in the subframes.

According to the present method, at each slot, each node considered from among the nodes of the network can, alternatively, transmit a subframe or else remain waiting for a possible a subframe transmitted by another node; in this latter case, it is possible for the considered node to receive effectively a subframe, or else, on account, for example, of inactivity or collisions, for the considered node not to receive any subframe. The fact that, during each slot, the considered node transmits a subframe, or else remains waiting for a possible subframe, is determined by the considered node as described hereinafter. In what follows, instead, the present method is described with reference to a situation where the nodes of the network have already determined in which slots they will transmit or else will remain waiting; in other words, the ensuing description regards the situation where the nodes of the network have already sent at least one respective subframe.

In the case where the considered node receives a subframe, it stores the FI vector of the subframe received, for example in a respective memory designed to contain up to N FI vectors. In addition, in storing a FI vector received in a slot, the considered node associates said FI vector to the archetype slot that corresponds to said slot.

In greater detail, at the start of a generic k-th slot k, the considered node erases from the memory the FI vector associated to the archetype slot k *mod* N.

At the end of the slot k, in the case where the considered node has not transmitted, it stores the FI vector of the subframe possibly received, associating it to the archetype slot k *mod* N. In the case where the considered node has not transmitted or received any subframe, it stores a default FI vector, associating it to the archetype slot k *mod* N. The lack of reception can hence be equalled to the reception of a subframe containing a default FI vector. In what follows, it is assumed, by way example, that the default FI vector presents zero fields, including the BUSY and CLS bits, i.e., BUSY bit = 0, CLS bit = 0.

Assuming, without this implying any loss of generality, that the end of the slot k coincides with the start of the slot k+1, and that hence the considered node has already removed from the memory the FI vector associated to the archetype slot k+1 *mod* N, at the end of the slot k the node considered has in memory the N-1 FI vectors of the subframes possibly received in the slot k itself and in the previous N-2 slots, or else one or more default vectors, in the event of lack of reception.

Since each of the N fields of each FI vector stored corresponds to a respective archetype slot, at the start of the slot k the considered node has in memory a matrix data structure, which is formed, for example, by N-1 rows and N columns, and the elements of which are fields of FI vectors stored, and hence contain, amongst other things, state indications. In what follows the indices i and j are used for indexing, respectively, the rows and columns of the matrix data structure.

By way of example, Figure 4 shows an example of a matrix data structure, regarding a case where N=3. In addition, the fields that form the elements of the aforementioned matrix data structure are represented in a qualitative form with exclusive reference to the state indications contained in the fields themselves, and hence to the corresponding pairs of BUSY and CLS bits, i.e., without showing the corresponding source temporary identifiers and priority identifiers.

In greater detail, Figure 4 regards the instant of start of a slot w such that w *mod* 3 is equal to zero. In practice, each row i of the matrix data structure is formed by the FI vector stored by the node considered during a slot h, with w-3<h<w and such that h *mod* 3=i, with i=1, 2. In addition, Figure 4 shows dashed the portion of the matrix data structure that is removed by the node considered at the start of the slot w, i.e., precisely the row corresponding the FI vector stored during the slot w-3.

Generalizing what is shown by way example in Figure 4, at the start of each slot, the considered node has available (N-1)x N state indications, since it has in memory N-1 FI vectors, each of which contains N state indications. Equivalently, for each archetype slot, the considered node has available N-1 state indications, contained respectively in N-1 fields, each field belonging to a different FI vector stored; in practice, for an archetype slot u with 0=u=N-1, N-1 state indications are available contained in the column j=u of the matrix data structure implemented by the considered node.

Before describing in greater detail the aforementioned state indications, it is pointed out that, in what follows, given an archetype slot A, the field that i) belongs to the FI vector stored and associated to said archetype slot A, and ii) corresponds to said archetype slot A is referred to as the detection field corresponding to the archetype slot A. In other words, with reference to the aforementioned matrix data structure, the detection field of the archetype slot A is formed by the element indexed by i=A, j=A. In addition, given a generic node and an archetype slot, the detection field corresponding to said archetype slot indicates what the generic node has effectively received in the most recent slot corresponding to said archetype slot.

In the case where the considered node transmits a subframe in the slot k, after it has removed from the memory the FI vector associated to the archetype slot k *mod* N, it enters N state indications in as many fields of the FI vector of the subframe, each state indication regarding one of the N archetype slots that make up the archetype frame. Each field of the FI vector entered in the subframe contains a respective state indication, encoded, for example, as already mentioned, by using the aforementioned BUSY and CLS bits. In particular, four different state indications are possible, which are, respectively, associated to corresponding pairs of values of the BUSY bit and CLS bit of the field itself, and are a function of the FI vectors stored by the node considered. In other words, the state indications entered in the subframe are a function of the state indications present in the FI vectors stored, as described hereinafter.

In greater detail, the aforementioned state indications comprise:
- a free-state indication, associated to the pair BUSY bit=0 and CLS bit=0;
- an occupied-state indication, associated to the pair BUSY bit=1, CLS bit=0;
- an indication of collision, associated to the pair BUSY bit=0, CLS bit=1; and
- an indication of indirect connection, associated to the pair BUSY bit=1, CLS bit=1.

In practice, in the case where the state indications are encoded in the way described and the default FI vector presents zero fields, storing the default FI vector is equivalent to storing a FI vector the fields of which present all the free-state indication. However, for generality, in what follows we will continue to maintain the distinction between free-state indication and default indication, because embodiments are in any case possible in which the state indications are encoded, for example, by more than two bits, and the default indication differs from the free-state indication, the occupied-state indication, the indication of collision, and the indication of indirect connection, or else embodiments in which the free-state indication is not associated to the pair BUSY bit = 0, CLS bit = 0.

Operatively, assuming that the aforementioned slot k corresponds to an archetype slot TX1 (k *mod* N = TX1), the considered node enters, in the field of the FI vector of the transmitted subframe (which, more precisely, is about to be transmitted) that corresponds to said archetype slot TX1, the occupied-state indication, the source temporary identifier of the considered node, which in what follows is referred to, precisely, as the source temporary identifier, and a priority identifier indicating the priority that it is intended to attribute to the subframe itself.

As regards, instead, the remaining fields of the FI vector of the transmitted subframe, the considered node proceeds as described hereinafter. Given a field, from among the aforementioned remaining fields, that corresponds to an archetype slot B, the considered node considers the N-1 fields of the FI vectors stored that correspond to said archetype slot B (equivalently, reads the column j=B of the matrix data structure implemented), and enters, in said field of the FI vector of the subframe transmitted,
1) the free-state indication (BUSY bit=0, CLS bit=0), if all the considered fields contain the free-state indication or the default indication, or else if one or more considered fields contain the indication of indirect connection, and the remaining fields contain the free-state indication or the default indication;
2) the occupied-state indication (BUSY bit=1, CLS bit=0), if, among the N-1 considered fields, the detection field corresponding to the archetype slot B contains the occupied-state indication, and the source temporary identifier contained therein identifies an occupying node, the remaining N-2 considered fields alternatively containing the default indication, or the free-state indication, or the indication of indirect connection, or else containing the occupied-state indication and source temporary identifiers that identify the aforementioned occupying node;
3) the indication of collision (BUSY bit=0, CLS bit=1), if two or more of the considered fields contain the occupied-state indication but contain different source temporary identifiers;
4) the indication of indirect connection (BUSY bit=1, CLS bit=1), if the detection field corresponding to the archetype slot B contains the default indication, and one or more of the remaining N-2 considered fields contain the occupied-state indication and equal source temporary identifiers, which refer to a distant node.

In addition, once again with reference to the aforementioned field of the FI vector of the transmitted subframe:
- in case 1), the considered node cannot enter any source temporary identifier or any priority identifier;
- in case 2), the considered node enters also the source temporary identifier of the occupying node, in addition to the priority identifier contained in the detection field corresponding to the archetype slot B;
- in case 3), the considered node enters also the source temporary identifier contained in the field with maximum priority identifier from among the fields considered that have generated the collision, in addition to said maximum priority identifier, or else, in the case where the priority identifiers of the fields that have generated the collision are the same, a source temporary identifier randomly chosen from among the source temporary identifiers contained therein; and
- in case 4), the considered node enters also the source temporary identifier of the distant node; furthermore, in this case, it is possible to enter also the priority identifier corresponding to the distant node.

As has been mentioned, the foregoing description refers to a situation where the considered node has previously determined in which slots to transmit and in which slots to remain in a wait state. In detail, to determine in which slots to transmit and in which slots to remain in a wait state, the considered node operates as described hereinafter.

In detail, when the considered node enters the network (for example, it is turned on, or else it approaches another node of the network at a distance such that they are able to transmit subframes to one another), it waits N first slots, in which it receives possible subframes transmitted by other nodes, and stores the FI vectors contained therein. During said N first slots, the considered node does not erase any FI vector from its own matrix data structure.

Next, on the basis of the FI vectors stored, the considered node determines from among the N future slots (that have not yet elapsed, hence subsequent to the N first slots during which the node has waited), if there are accessible slots. In particular, a slot z from among the future slots is accessible if all the fields of the FI vectors stored that correspond to the archetype slot z *mod* N (i.e., the column j = z *mod* N of the matrix data structure) present the free-state indication, or else the default indication.

Given the possible accessible slots, the considered node selects from among them an elected slot. For example, in the case where there is a single accessible slot, the elected slot coincides with the accessible slot; instead, in the case of a number of accessible slots, the elected slot is randomly chosen from among the accessible slots. In what follows, it is assumed, without this implying any loss of generality, that the considered node will choose a p-th slot p as elected slot.

Once the elected slot has been selected, the considered node waits for the end of the slot that precedes the elected slot (the slot p-1), continuing to store the FI vectors of the subframes possibly received, as described previously, and erasing at the start of each slot k the FI vector stored (i.e., the row indexed by i = k *mod* N) and associated to the archetype slot k *mod* N. At the end of the slot p-1, the considered node verifies that the slot p is effectively free; i.e., it verifies that the fields of the FI vectors stored that correspond to the archetype slot p *mod* N still contain the free-state indication, or else the default indication. In what follows, it is assumed that the slot p corresponds to the archetype slot TX2 (p *mod* N = TX2) .

If the elected slot is not effectively free, the considered node repeats the operations referred to above for determining new accessible slots and, subsequently, a new elected slot.

Instead, if the slot p is effectively free, the considered node transmits the subframe during the slot p, entering state indications in the fields of the FI vector of the transmitted subframe, as described previously. In addition, the considered node erases from the matrix data structure the FI vector associated to the archetype slot p *mod* N (equivalently, the row indexed by i=p *mod* N).

After transmission of the subframe in the slot p, in the subsequent N-1 slots the considered node receives possible subframes transmitted by other nodes, storing the FI vectors contained therein and erasing at the start of each slot k the FI vector stored and associated to the archetype slot k *mod* N. Next, the node examines the N-1 fields of the FI vectors stored that correspond to the archetype slot TX2, and verifies that they contain the default indication, or else contain the free-state indication, or else contain the occupied-state indication and the source temporary identifier of the node itself.

If this occurs, the considered node takes it that the transmission has gone through correctly, and can transmit a new subframe in the next slot, i.e., in the slot p+N, which corresponds again to the archetype slot TX2. To verify the correctness of the transmission of the new subframe, the considered node iterates the operations described previously, and so on.

Otherwise, i.e., in the case where one or more of the N-1 fields examined contain the occupied-state indication and source temporary identifiers of occupying nodes different from the node itself, or else present the indication of collision, the considered node considers its own priority identifier, i.e., the priority identifier entered thereby in the transmitted subframe, and the possible priority identifiers present in the aforementioned one or more of the N-1 examined fields.

If the maximum priority identifier is its own priority identifier, the considered node can transmit a new subframe in the next slot p+N. Instead, if the maximum priority identifier is contained in one of the N-1 examined fields, the considered node deems the slot occupied by the node identified by the source temporary identifier contained in the examined field that contains the maximum priority identifier. Consequently, the considered node abstains from transmitting and iterates the operations described previously, starting from determination of possible accessible slots.

In the particular case where there are two or more maximum priority identifiers among the priority identifiers considered, and one of these maximum priority identifiers is its own priority identifier, the considered node tries to transmit a new subframe in the next slot p+N, waits the subsequent N-1 subframes, and iterates the verifications described above. If it is verified once again that there are two or more maximum priority identifiers, among which its own priority identifier is present, the considered node, with a first probability, transmits a new subframe in the slot p+2N, and, with a second probability, abstains from transmitting; in the latter case, the considered node determines new accessible slots, chooses a new elected slot and proceeds as described previously.

According to one embodiment of the present method, at the moment of determining, at the end of the aforementioned N first slots, the elected slot, and in the absence of accessible slots, the considered node can consider the N slots subsequent to the N first slots, and transmit in the slot that corresponds to the archetype slot the corresponding FI-vector fields of which stored by the node considered contain the occupied-state indication and the minimum priority identifier, in such a way as to guarantee a quality of service for high-priority traffic.

It may moreover be noted that, at the moment of carrying out transmission of the first subframe after performing entry in the network, the considered node has in memory N FI vectors. In other words, at that moment, the matrix data structure implemented by the node considered has dimensions NxN. Once the first subframe has been transmitted, at each instant the considered node has in memory N-1 FI vectors, as described previously.

According to the present method, it is therefore possible to discriminate between free or occupied slots and slots in which a collision has taken place, propagate the information of collision, and thus prevent malfunctioning of the network itself. In particular, as compared to the RR-Aloha protocol, not only is there envisaged determination, for each of the N archetype slots of the archetype frame, of a corresponding state indication chosen from among four different state indications, but all the N state indications determined by each node are moreover propagated by the node itself, through transmission of its own subframes, to all the other nodes of the network. In this way, the present method guarantees a high quality of service even in the presence of fast-evolving scenarios.

Once again with reference to the example described in the regard Figure 2, upon reception of the subframe transmitted by the node n6 in slot five, the nodes n1, n2 and n3 detect a collision in slot two, since in slot two they have detected the transmission of the node n2, whilst the FI vector contained in the subframe transmitted by the node n6 indicates that slot two is occupied by the node n4. Consequently, in accordance with the present method, the nodes n1, n2, n3 will transmit subframes with FI vectors in which the fields corresponding to the archetype slot two present the BUSY bit equal to "0" and the CLS bit equal to "1", also enabling the other nodes to detect the collision.

Once again according to the present method, the possibility of transmitting indications of indirect connection enables prevention of the possibility of information associated to transmission by a specific node propagating to other nodes of the network for more than two hops.

In this connection, without this implying any loss of generality, the network shown in Figure 5 is considered, formed by the nodes nₐ, n_{b}, n_{c} and n_{d}. In detail, the nodes nₐ and n_{b} are directly connected to one another, i.e., the node n_{b} is able to receive the subframes transmitted by the node nₐ, and vice versa. Likewise, also the nodes n_{b} and n_{c}, as the nodes n_{c} and n_{d}, are directly connected. Instead, the node n_{c} is unable to receive the subframes transmitted by the node nₐ, for example on account of the excessive distance, and the node n_{d} is unable to receive either the subframes transmitted by the node nₐ or the subframes transmitted by the node n_{b}. Consequently, in the technical jargon the node n_{b} is said to be at a distance of one hop from the node nₐ, the node n_{c} is said to be at a distance of two hops from the node nₐ, i.e., to be connected indirectly to the node nₐ, by interposition of an intermediate node (the node n_{b}), and the node n_{c} is said to be at a distance of three hops from the node nₐ, i.e., to be connected to the node nₐ by interposition of two intermediate nodes (the nodes n_{b} and n_{c}). It is again assumed that the number N of slots per frame is equal (for example) to ten, and that both the slots and the archetype slots are numbered staring from one. Finally, it is assumed that the nodes nₐ, n_{b}, n_{c} and n_{d} transmit, respectively, in slot two, slot five, slot nine, and slot ten.

According to the present method, the node nₐ transmits in slot two a first subframe, the FI vector of which contains a field corresponding to the archetype slot two, the BUSY bit and the CLS bit present in said field being respectively equal to "1" and "0". Said first subframe is received by the node n_{b}; therefore the node n_{b} considers slot twelve reserved, and hence does not transmit therein.

Next, when the node n_{b} transmits a second subframe in slot five, the second subframe contains a FI vector in which the field corresponding to the archetype slot two still presents the BUSY bit equal to "1" and the CLS bit equal to "0". The second subframe is received, not only by the node nₐ, but also by the node n_{c}, which hence considers slot twelve reserved.

Next, the node n_{c} transmits - in slot nine, for example - a third subframe, in which, among other things, the field of the FI vector that corresponds to the archetype slot two presents the BUSY bit equal to "1" and the CLS bit equal to "1". It follows that, upon reception of the third subframe, the node n_{d} considers slot twelve reserved; however, at the moment of transmitting a fourth subframe - in slot ten, for example - it sets to "0" the BUSY bit and the CLS bit of the field corresponding to the archetype slot two. In this way, any possible further nodes (not shown) connected to the node n_{d} will consider slot twelve as accessible and will be able to transmit subframes therein, without any collisions occurring.

Consequently, the present method enables re-utilization of a slot in which a certain node has carried out a transmission, by nodes that are at a distance of more than three hops from the node that has carried out the transmission. In this way, the levels of performance of the communication network are optimized by enabling a re-use of the slots. In addition, the present method enables the so-called problem of the "hidden terminal" to be overcome; i.e., it prevents generation of any incongruence between state indications stored by different nodes, which may arise, for example, in situations in which a given node is visible to a further node, but not to other nodes of the network.

According to a further embodiment, when the considered node enters the network, after waiting N slots, it determines the value of its own source temporary identifier by choosing any value comprised (for example) between zero and two hundred and fifty-five, provided that it is not used by other nodes in the above N slots; in the case where there are not values unused by other nodes, the considered node randomly chooses a value between zero and two hundred and fifty-five. In what follows, the value chosen as source temporary identifier by the considered node at the moment of carrying out the first transmission will be referred to as "first label".

In detail, when the considered node transmits for the first time a subframe, for example in a transmission slot corresponding to the archetype slot TX3, it enters, in the field of the FI vector that corresponds to the archetype slot TX3, the occupied-state indication and the first label.

In reception, the other nodes that receive the subframe store, instead of the first label, a second label, obtained, for example, by calculating a function having as arguments the first label and the MAC address of the considered node, said MAC address being present in the payload portion of the subframe transmitted by the considered node; for example, said function can calculate the hash of its own arguments. Next, when the other nodes in turn transmit subframes, instead of entering the first label, they enter, in the field of the FI vector that corresponds to the archetype slot TX3, the second label.

Next, in order to verify correctness of its own transmission, the considered node verifies that the N-1 fields corresponding to the archetype slot TX3 of the N-1 FI vectors stored in the N-1 slots subsequent to the transmission comprise, if they contain the occupied-state indication, the aforementioned second label. Said second label is, in fact, known to the considered node in so far as it can be computed on the basis of the first label and of its own MAC address.

At a subsequent transmission, the considered node uses a third label, obtained (for example) by calculating the aforementioned function and using as arguments of the function the second label and its own MAC address. In reception, the other nodes in turn compute a fourth label, and so on.

In this way, also in the case where two nodes adopt, at the respective first transmissions (in one and the same frame), one and the same first label, the respective second labels are likely to be different in so far as they are calculated with different arguments (MAC addresses), hence enabling detection of possible collisions that involve the two nodes. If also the second labels are the same, the respective third labels are in any case likely to be different, and so on. In addition, it is possible to detect collisions also using labels formed by a limited number of bits, for example fewer than eight bits, limiting the overhead within the subframes.

It should moreover be noted how the fact that the nodes do not keep in memory more than N FI vectors means that the use, by each node, of different labels in different transmissions does not involve any ambiguity. In fact, it is not necessary for the nodes to identify precisely nodes at a distance of more than one hop, but rather it is sufficient for them to detect the possible occupation of slots, or else the presence of possible collisions.

The advantages that the present access method affords emerge clearly from the foregoing discussion.

Finally, it is evident that modifications and variations may be made to the access method described, without thereby departing from the scope of the present invention.

For example, it is possible for the nodes not to store exactly the FI vectors as present in the subframes received, but rather to process the state indications, possibly resorting to further indicators. For instance, in the case of a field of a FI vector received in a reception slot and containing the indication of indirect connection, it is possible to store the free-state indication, storing in an appropriate indicator the impossibility of transmitting in a next slot corresponding to the archetype slot that corresponds to the reception slot. Again, the operations of erasure of FI vectors stored must not necessarily be carried out at the start of the slot. Finally, it is possible to apply the present method together with other protocols of a node type, for example by alternating periods of time in which the present access method is applied to other periods of time in which a protocol of a known type is applied.

## Claims

1. A method for accessing a communication channel for a communication network comprising a plurality of nodes configured for transmitting and receiving subframes by means of said communication channel, said method comprising the steps of:
- defining a succession of frames, each frame being formed by one and the same first number (N) of time intervals, each time interval being configured to host transmission of a single subframe and being associated to a corresponding period of a reference frame formed by a number of periods equal to said first number (N) of time intervals; and
- executing selectively, at each time interval and by each given node of the communication network, one from among the operations of:
- determining, for each period of the reference frame, a corresponding state indication, and transmitting an own subframe, said transmitting step comprising including in said own subframe a vector (FI) formed by a number of fields equal to said number of periods, each field regarding a corresponding period, and entering in each of said fields the state indication determined for the corresponding period; and
- receiving a possible subframe transmitted by another node, and storing information regarding the state indications contained in the vector (FI) included in said received subframe;
said access method being **characterized in that** said step of determining, for each period of the reference frame, a corresponding state indication, comprises selecting by the given node, alternatively, a free-state indication, an occupied-state indication, an indication of collision or an indication of indirect connection, which are all different from one another; and wherein said step of storing information regarding the state indications contained in the vector (FI) included in said received subframe comprises storing the vector (FI) included in said received subframe and associating said vector (FI) included in said received subframe to the period corresponding to the time interval of reception by the given node of said received subframe; said method further comprising carrying out, by the given node, the step of, in the case where in a time interval no subframe is transmitted or received, storing a default vector the fields of which contain a default indication; and wherein said step of transmitting an own subframe comprises, for each field considered from among the fields of the vector (FI) included in said own subframe, in the case where the state indication entered in the considered field is the occupied-state indication, the indication of collision, or the indication of indirect connection, moreover entering in the considered field a source identifier, which identifies a respective occupying node; and wherein said step of selecting by the given node, alternatively, a free-state indication, an occupied-state indication, an indication of collision or an indication of indirect connection comprises, in a first time interval:
- selecting, for the period corresponding to the first time interval, the occupied-state indication;
- selecting each of the remaining periods of the reference frame and, for each selected period, selecting the fields of the vectors (FI) stored that correspond to the selected period, and subsequently selecting, for the selected period:
- the free-state indication, if the selected fields contain the default indication or the free-state indication, or else if at least one of the selected fields contains the indication of indirect connection and the other selected fields contain the default indication, or else the free-state indication;
- the occupied-state indication, if a detection field forming part of the selected fields and contained in the vector (FI) stored and associated to the selected period contains the occupied-state indication and a first source identifier, and the other fields from among said selected fields contain the default indication, or else contain the free-state indication or the indication of indirect connection, or else contain the occupied-state indication and said first source identifier;
- the indication of collision, if a first field and a second field from among said selected fields both contain the occupied-state indication and different source identifiers; and
- the indication of indirect connection, if said detection field contains the default indication, and one or more of the other selected fields contain the occupied-state indication and the same source identifiers.

2. The access method according to claim 1, further comprising carrying out, by each given node of the communication network, the steps of:
- accessing the communication network; and
- waiting a second number of time intervals, and subsequently erasing, at each successive time interval, the vector (FI) stored and associated to the period corresponding to said subsequent time interval.

3. The access method according to claim 2, further comprising carrying out, by each given node of the communication network, the steps of:
- during said second number of time intervals, executing the operation of receiving and storing;
- after said second number of time intervals, selecting, on the basis of the vectors (FI) stored, a number of accessible time intervals from among a number of time intervals subsequent to said second number of time intervals, said number of time intervals subsequent to said second number of time intervals being equal to said first number (N) of time intervals;
- from among said number of accessible time intervals, selecting an elected time interval, said elected time interval corresponding to an elected period;
- executing the operation of receiving and storing up to the time interval that precedes the elected time interval, and subsequently verifying a first criterion that comprises verifying whether the fields of the vectors (FI) stored and corresponding to the elected period contain, alternatively, the free-state indication or else the default indication; and
- in the case where said first criterion is respected, transmitting in the elected time interval; otherwise, determining a number of new accessible time intervals and selecting a new elected time interval.

4. The access method according to claim 3, wherein said second number of time intervals is equal to said first number (N) of time intervals.

5. The access method according to claim 3 or claim 4, wherein said step of selecting a number of accessible time intervals comprises selecting each time interval from among said number of time intervals subsequent to said second number of time intervals and verifying that said time interval respects a second criterion that comprises verifying that the fields of the vectors (FI) stored and corresponding to the period that corresponds to the selected time interval contain, alternatively, the free-state indication or else the default indication.

6. The access method according to claim 5, wherein the step of transmitting an own subframe is carried out in a transmission time interval; the method further comprising carrying out, by each given node of the communication network, the steps of:
- after a number of further time intervals equal to said first number (N) of time intervals decremented by one, verifying that the fields of the vectors (FI) stored and corresponding to the period that corresponds to the transmission time interval contain the default indication, or else contain the free-state indication, or else contain the occupied-state indication and a source identifier which identifies the given node.

7. The access method according to claim 6, wherein said step of transmitting an own subframe comprises entering a priority identifier in each field of the vector (FI) included in said own subframe.

8. The access method according to claim 7, wherein said step of selecting a number of accessible time intervals comprises, in the case where no time interval selected from among said number of time intervals subsequent to said second number of time intervals respects said second criterion, selecting a single accessible time interval from among said number of time intervals subsequent to said second number of time intervals according to the priority identifiers entered in the fields of the stored vectors (FI).

9. The access method according to claim 8, wherein said step of entering a source identifier comprises, for each single transmitted subframe, the steps of:
- entering, in the field of the vector (FI) included in the single transmitted subframe and corresponding to the period that corresponds to the transmission time interval of the single subframe, a respective first label associated to the given node and to said single transmitted subframe;
- entering, in the other fields of the vector (FI) included in the single transmitted subframe, respective second labels, which are functions of first labels contained in subframes previously received by the given node and of information contained in said previously received subframes.

10. A node for a mobile communication network, configured for implementing all of the steps of the access method according to any one of the preceding claims.

11. A mobile communication network, comprising at least one node according to claim 10.

12. The mobile communication network according to claim 11, **characterized in that** it is of a wireless type.

13. A software product that can be loaded into a memory of a node of a communication network and is configured for implementing, when run, all of the steps of the access method according to any one of claims 1 to 9.

## Patentansprüche

1. Verfahren zum Zugreifen auf einen Kommunikationskanal für Kommunikationsnetzwerke mit einer Vielzahl von Knoten, die zum Übertragen und Empfangen von Subframes mittels des Kommunikationskanals eingerichtet sind,
wobei das Verfahren die Schritte aufweist:
- Definieren einer Folge von Frames,
wobei jeder Frame durch ein und dieselbe erste Anzahl (N) von Zeitintervallen gebildet wird,
wobei jedes Zeitintervall zum Aufnehmen einer Übertragung eines einzelnen Subframes eingerichtet ist und mit einer korrespondierenden Periode eines Referenzframes verknüpft ist, der durch eine Anzahl von Perioden gebildet wird, die gleich der ersten Anzahl (N) von Zeitintervallen ist; und
- selektives Ausführen eines aus den folgenden Vorgängen zu jedem Zeitintervall und durch jeden gegebenen Knoten des Kommunikationsnetzwerks:
- Festlegen einer entsprechenden Zustandsangabe für jede Periode des Referenzframes und Übertragen eines eigenen Subframes,
wobei der Schritt des Übertragens ein Einsetzen eines Vektors (FI) in den eigenen Subframe aufweist, der durch eine Anzahl von Feldern gleich der Anzahl von Perioden gebildet wird,
wobei jedes Feld auf eine korrespondierende Periode bezogen ist, und
- Eintragen in jedes der Felder die für die korrespondierende Periode festgelegte Zustandsangabe; und
- Empfangen eines möglichen Subframes, der von einem anderen Knoten übertragen wurde, und Speichern von Informationen hinsichtlich der Zustandsangaben, die in dem im empfangenen Subframe eingesetzten Vektor (FI) enthalten sind;
wobei das Zugriffsverfahren **dadurch gekennzeichnet ist, dass** der Schritt des Festlegens einer jeweiligen Zustandsangabe für jede Periode des Referenzframes ein Auswählen einer Zustandsangabe durch den gegebenen Knoten alternativ zwischen einer Frei-Zustandsangabe, einer Besetzt-Zustandsangabe, einer Kollisionsangabe oder einer Angabe zur indirekten Verbindung aufweist, die alle von einander verschieden sind; und
wobei der Schritt des Speicherns von Informationen hinsichtlich der Zustandsangaben, die in dem empfangenen Subframe eingesetzten Vektor enthaltenen sind, ein Speichern des in dem empfangenen Subframe eingesetzten Vektors (FI) und ein Verknüpfen des in dem empfangenen Subframe eingesetzten Vektors (FI) mit der Periode aufweist, die mit dem Empfangszeitintervall des empfangenen Subframes durch den gegebenen Knotens korrespondiert;
wobei das Verfahren ferner aufweist,
Ausführen durch den gegebenen Knoten den Schritt, für den Fall, dass in einem Zeitintervall kein Subframe übertragen oder empfangen wurde, des Speicherns eines Vorgabevektors mit Feldern, die eine vorgegebene Zustandsangabe enthalten; und
wobei der Schritt des Übertragens eines eigenen Subframes aufweist, für jedes berücksichtigtes Feld aus den Feldern des in dem eigenen Subframe eingesetzten Vektors (FI), für den Fall, dass die eingegebene Zustandsangabe in dem berücksichtigten Feld die Besetzt-Zustandsangabe, Kollisionsangabe oder eine Angabe zur indirekten Verbindung ist, außerdem ein Eintragen eines Quellen-Identifikators in das berücksichtigte Feld, der einen entsprechend besetzten Knoten identifiziert; und
wobei der Schritt des Auswählens durch den gegebenen Knoten alternativ zwischen einer Frei-Zustandsangabe, einer Besetzt-Zustandsangabe, einer Kollisionsangabe oder einer Angabe zur indirekten Verbindung in einem ersten Zeitintervall aufweist:
- Auswählen für die Periode, die mit dem ersten Zeitintervall korrespondiert, der Besetzt-Zustandsangabe;
- Auswählen jeder der verbleibenden Perioden des Referenzframes und für jede ausgewählte Periode Auswählen der Felder des gespeicherten Vektors, der mit der ausgewählten Periode korrespondiert, und anschließend Auswählen für die ausgewählten Perioden:
- der Frei-Zustandsangabe, falls die ausgewählten Felder die vorgegebene Angabe oder die Frei-Zustandsangabe enthalten, oder sonst, falls mindestens eines der ausgewählten Felder die Angabe zur indirekten Verbindung enthält und die anderen ausgewählten Felder die vorgegebene Angabe enthalten, oder sonst die Frei-Zustandsangabe;
- der Besetzt-Zustandsangabe, falls ein Detektionsfeld, das einen Teil der ausgewählten Felder bildet und in dem Vektor (FI) enthalten ist, der gespeichert und mit der ausgewählten Periode verknüpft ist, die Besetzt-Zustandsangabe und einen ersten Quellen-Identifikator enthält, und die anderen Felder aus den ausgewählten Feldern die vorgegebene Angabe enthält, oder sonst die Frei-Zustandsangabe oder die Angabe zur indirekten Verbindung enthält, oder sonst die Besetzt-Zustandsangabe und den ersten Quellen-Identifikator enthält;
- der Kollisionsangabe, falls ein erstes Feld und ein zweites Feld aus den ausgewählten Feldern beide die Besetzt-Zustandsangabe und unterschiedliche Quellen- Identifikatoren enthalten und;
- der Angabe zur indirekten Verbindung, falls das Detektionsfeld die vorgegebene Angabe enthält und eines oder mehrere der anderen ausgewählten Felder die Besetzt-Zustandsangabe enthalten und gleiche Quellen-Identifikatoren enthalten.

2. Zugriffsverfahren nach Anspruch 1,
ferner mit einem Ausführen durch jeden gegebenen Knoten des Kommunikationsnetzwerks der Schritte:
- Zugreifen auf das Kommunikationsnetzwerk; und
- Warten einer zweiten Anzahl von Zeitintervallen und nachfolgend Löschen des Vektors (FI) an jedem folgenden Zeitintervall, der gespeichert und mit der Periode verknüpft ist, die mit dem nachfolgenden Zeitintervall korrespondiert.

3. Zugriffsverfahren nach Anspruch 2, ferner mit
einem Ausführen durch jeden gegebenen Knoten des Kommunikationsnetzwerks der Schritte:
- während der zweiten Anzahl von Zeitintervallen, Ausführen der Empfangens-und Speichern-Operationen;
- nach der zweiten Anzahl von Zeitintervallen, Auswählen auf der Basis der gespeicherten Vektoren (FI) einer Anzahl von zugreifbaren Zeitintervallen aus einer Anzahl von Zeitintervallen folgend aus der zweiten Anzahl von Zeitintervallen,
wobei die Anzahl von Zeitintervallen folgend aus der zweiten Anzahl von Zeitintervallen zu der ersten Anzahl (N) der Zeitintervalle gleich ist;
- Auswählen eines ausgewählten Zeitintervalls aus der Anzahl der zugreifbaren Zeitintervallen,
wobei das ausgewählte Zeitintervall mit einer ausgewählten Periode korrespondiert;
- Ausführen der Empfangens- und des Speichern- Operation bis zu dem Zeitintervall, das dem ausgewählten Zeitintervall vorgeht und nachfolgendes Verifizieren eines ersten Kriteriums, das ein Verifizieren aufweist, ob die Felder des gespeicherten und mit der ausgewählten Periode korrespondierenden Vektors (FI) die Frei-Zustandsangabe oder alternativ sonst die der vorgegebenen Angabe enthält; und
- in dem Fall, in dem das erste Kriterium erfüllt ist, Übertragen während des ausgewählten Zeitintervalls; anderenfalls Festlegen einer Anzahl von neuen zugreifbaren Zeitintervallen und Auswählen eines neuen ausgewählten Zeitintervalls.

4. Zugriffsverfahren nach Anspruch 3,
wobei die zweite Anzahl von Zeitintervallen gleich der ersten Anzahl (N) der Zeitintervalle ist.

5. Zugriffsverfahren nach Anspruch 3 oder 4,
wobei der Schritt des Auswählens einer Anzahl zugreifbarer Zeitintervalle ein Auswählen jedes Zeitintervalls aus der Anzahl von Zeitintervallen folgend aus der zweiten Anzahl von Zeitintervallen und ein Verifizieren aufweist, dass die Zeitintervalle ein zweites Kriterium erfüllen, das ein Verifizieren aufweist, dass die Felder des gespeicherten und mit der Periode korrespondierenden Vektors (FI),
wobei die Periode mit dem ausgewählten Zeitintervall korrespondiert, die Frei-Zustandsangabe oder alternativ sonst die vorgegebene Angabe enthalten.

6. Zugriffsverfahren nach Anspruch 5,
wobei der Schritt des Übertragens eines eigenen Subframes während eines Übertragungszeitintervalls ausgeführt wird;
wobei das Verfahren ferner ein Ausführen durch jeden gegebenen Knoten des Kommunikationsnetzwerks die Schritte aufweist:
- nach einer Anzahl von weiteren Zeitintervallen gleich der ersten Anzahl (N) der Zeitintervalle um eins heruntergezählt, Verifizieren, dass die Felder des gespeicherten und zu der Periode korrespondierenden Vektors (FI), wobei die Periode zu dem Übertragungszeitintervall korrespondiert, die vorgegebene Angabe enthält, oder sonst die Frei-Zustandsangabe enthält, oder sonst die Besetzt-Zustandsangabe und einen Quellen-Identifikator enthält, der den gegebenen Knoten identifiziert.

7. Zugriffsverfahren nach Anspruch 6,
wobei der Schritt des Übertragens eines eigenen Subframes ein Eintragen eines Prioritäts-Identifikators in jedes Feld des Vektors (FI) aufweist, der in dem eigenen Subframe eingesetzt ist.

8. Zugriffsverfahren nach Anspruch 7,
wobei der Schritt des Auswählens einer Anzahl von zugreifbaren Zeitintervallen aufweist, für den Fall, dass kein ausgewähltes Zeitintervall aus der Anzahl von Zeitintervallen folgend aus der zweiten Anzahl von Zeitintervallen das zweite Kriterium erfüllt, Auswählen eines einzelnen zugreifbaren Zeitintervalls aus der Anzahl von Zeitintervallen folgend aus der zweiten Anzahl von Zeitintervallen gemäß dem Priorität-Identifikator, der in die Felder des gespeicherten Vektors (FI) eingetragen ist.

9. Zugriffsverfahren nach Anspruch 8,
wobei der Schritt des Eintragens eines Quellen-Identifikators für jeden einzelnen übertragenen Subframe die Schritte aufweist:
- Eintragen in das Feld des Vektors (FI), der in dem einzelnen übertragenen Subframe eingesetzt ist und mit der Periode korrespondiert, die mit dem Übertragungszeitintervall des einzelnen Subframes korrespondiert, einer entsprechenden erste Kennzeichnung, die mit dem gegebenen Knoten und mit dem einzeln übertragenen Subframe verknüpft ist;
- Eintragen in die anderen Felder des Vektors (FI), der in dem einzeln übertragenen Subframe eingesetzt ist, entsprechende zweite Kennzeichnungen, die in Abhängigkeit von den ersten Kennzeichnungen funktionieren, die in den vorher durch die gegebenen Knoten empfangenen Subframes enthalten sind, und in Abhängigkeit von Informationen funktionieren, die in den vorher empfangenen Subframes enthalten sind.

10. Ein Knoten für ein mobiles Kommunikationsnetzwerk,
der zum Implementieren aller Schritte des Zugriffsverfahrens nach einem der vorstehenden Ansprüche eingerichtet ist.

11. Ein mobiles Kommunikationsnetzwerk,
aufweisend mindestens einen Knoten nach Anspruch 10.

12. Mobiles Kommunikationsnetzwerk nach Anspruch 11,
**dadurch gekennzeichnet, dass** es von einem drahtlosen Typ ist.

13. Softwareprodukt,
das in einen Speicher eines Knotens oder eines Kommunikationsnetzwerks ladbar ist und zum Implementieren eingerichtet ist, wenn es arbeitet, alle Schritte des Zugriffsverfahrens nach einem der Ansprüche 1 bis 9 auszuführen.

## Revendications

1. Procédé permettant d'accéder à un canal de communication pour un réseau de communication comportant une pluralité de noeuds configurés pour transmettre et recevoir des sous-trames au moyen dudit canal de communication, ledit procédé comprenant les étapes comprenant le fait de :
- définir une succession de trames, chaque trame étant formée par un seul et même premier nombre (N) d'intervalles de temps, chaque intervalle de temps étant configuré pour héberger une transmission d'une seule sous-trame et étant associé à une période correspondante d'une trame de référence formée par un certain nombre de périodes égal au dit premier nombre (N) d'intervalles de temps ; et
- exécuter sélectivement, au niveau de chaque intervalle de temps et par chaque noeud donné du réseau de communication, une opération parmi les opérations consistant à :
- déterminer, pour chaque période de la trame de référence, une indication d'état correspondant, et transmettre une sous-trame spécifique, ladite étape de transmission comprenant le fait d'inclure dans ladite sous-trame spécifique un vecteur (FI) formé par un nombre de champs égal au dit nombre de périodes, chaque champ concernant une période correspondante, et entrer dans chacun desdits champs l'indication d'état déterminée pour la période correspondante ; et
- recevoir une sous-trame possible transmise par un autre noeud, et stocker une information concernant les indications d'état contenues dans le vecteur (FI) inclus dans ladite sous-trame reçue ;
ledit procédé d'accès étant **caractérisé en ce que** ladite étape de détermination, pour chaque période de la trame de référence, d'une indication d'état correspondante, comprend le fait de sélectionner par ledit noeud donné, alternativement, une indication d'état libre, une indication d'état occupé, une indication de collision ou une indication de connexion indirecte, lesquelles sont toutes différentes les unes des autres ; et dans lequel ladite étape consistant à stocker l'information concernant les indications d'état contenues dans le vecteur (FI) inclus dans ladite sous-trame reçue comprend de stocker le vecteur (FI) inclus dans ladite sous-trame reçue et d'associer ledit vecteur (FI) inclus dans ladite sous-trame reçue à la période correspondant à l'intervalle de temps de réception par le noeud donné de ladite sous-trame reçue ; ledit procédé comprenant, de plus, le fait de faire exécuter, par le noeud donné, l'étape consistant , dans le cas où, dans un intervalle de temps, aucune sous-trame n'est transmise ni reçue, à stocker un vecteur par défaut dont les champs contiennent une indication par défaut ; et dans lequel ladite étape consistant à transmettre une sous-trame spécifique comporte, pour chaque champ considéré parmi les champs du vecteur (FI) inclus dans ladite sous-trame spécifique, dans le cas où l'indication d'état introduite dans le champ considéré est l'indication d'état occupé, l'indication de collision ou l'indication de connexion indirecte, d'introduire, encore en plus dans le champ considéré, un identificateur de source, lequel identifie un noeud d'occupation respectif ; et dans lequel ladite étape consistant à sélectionner par l'intermédiaire du noeud donné, alternativement, une indication d'état libre, une indication d'état occupé, une indication de collision ou une indication de connexion indirecte comprend, dans un premier intervalle de temps, le fait de :
- sélectionner, pour la période correspondant au premier intervalle de temps, l'indication d'état occupé ;
- sélectionner chacune des périodes restantes de la trame de référence et, pour chaque période sélectionnée, sélectionner les champs des vecteurs (FI) stockés qui correspondent à la période sélectionnée, et sélectionner par la suite, pour la période sélectionnée :
- l'indication d'état libre, si les champs sélectionnés contiennent l'indication par défaut ou l'indication d'état libre, ou bien, si au moins l'un des champs sélectionnés contient l'indication de connexion indirecte et que les autre champs sélectionnés contiennent l'indication par défaut, ou bien l'indication d'état libre ;
- l'indication d'état occupé, si un champ de détection faisant partie des champs sélectionnés et contenus dans le vecteur (FI) stocké, et associé à la période sélectionnée contient l'indication d'état occupé et un premier identificateur de source, et si les autres champs parmi lesdits champs sélectionnés contiennent l'indication par défaut, ou bien contiennent l'indication d'état libre ou l'indication de connexion indirecte, ou bien contiennent l'indication d'état occupé et ledit premier identificateur de source ;
- l'indication de collision, si un premier champ et un second champ provenant desdits champs sélectionnés contiennent tous deux l'indication d'état occupé et des identificateurs de source différents ; et
- l'indication de connexion indirecte, si ledit champ de détection contient l'indication par défaut, et si un ou plusieurs des autres champs sélectionnés contient (contiennent) l'indication d'état occupé et les même identificateurs de source.

2. Procédé d'accès selon la revendication 1, comprenant, de plus, le fait de réaliser, par l'intermédiaire de chaque noeud donné du réseau de communication, les étapes comprenant de :
- accéder au réseau de communication ; et
- attendre un second nombre d'intervalles de temps, et par la suite, effacer au niveau de chaque intervalle de temps successif, le vecteur (FI) stocké et associé à la période correspondant au dit intervalle de temps ultérieur.

3. Procédé d'accès selon la revendication 2 comprenant, de plus, de réaliser, par l'intermédiaire de chaque noeud donné du réseau de communication, les étapes comportant le fait de :
- pendant ledit second nombre d'intervalles de temps, exécuter l'opération consistant à recevoir et à stocker ;
- après ledit second nombre d'intervalles de temps, sélectionner, sur la base des vecteurs (FI) stockés, un nombre d'intervalles de temps d'accès à partir d'un nombre d'intervalles de temps postérieur au dit second nombre d'intervalles de temps, ledit nombre d'intervalles de temps postérieur au dit second nombre d'intervalles de temps étant égal audit premier nombre (N) d'intervalles de temps ;
- à partir dudit nombre d'intervalles de temps d'accès, sélectionner un intervalle de temps choisi, ledit intervalle de temps choisi correspondant à une période choisie ;
- exécuter l'opération consistant à recevoir et à stocker jusqu'à l'intervalle de temps qui précède l'intervalle de temps choisi, et , ultérieurement, vérifier un premier critère qui comprend de vérifier si les champs des vecteurs (FI) stockés et correspondant à la période choisie contiennent, alternativement, l'indication d'état libre ou bien l'indication par défaut ; et
- dans le cas où ledit premier critère est respecté, transmettre dans l'intervalle de temps choisi ; sinon, déterminer un nombre de nouveaux intervalles de temps d'accès et sélectionner un nouvel intervalle de temps choisi.

4. Procédé d'accès selon la revendication 3, dans lequel ledit second nombre d'intervalles de temps est égal au dit premier nombre (N) d'intervalles de temps.

5. Procédé d'accès selon la revendication 3 ou la revendication 4, dans lequel ladite étape consistant à sélectionner un nombre d'intervalles de temps d'accès comprend de sélectionner chaque intervalle de temps à partir dudit nombre d'intervalles de temps postérieur au dit second nombre d'intervalles de temps et vérifier que ledit intervalle de temps respecte un second critère qui comporte le fait de vérifier que les champs des vecteurs (FI) stockés et correspondant à la période qui correspond à l'intervalle de temps sélectionné contiennent, alternativement, l'indication d'état libre ou bien l'indication par défaut.

6. Procédé d'accès selon la revendication 5, dans lequel l'étape consistant à transmettre une sous-trame spécifique est exécutée dans un intervalle de temps de transmission ; le procédé comprenant, de plus, le fait de réaliser, par l'intermédiaire de chaque noeud donné du réseau de communication, les étapes comprenant de :
- après un nombre d'intervalles de temps supplémentaires égal au dit premier nombre (N) d'intervalles de temps décrémenté de un, vérifier que les champs des vecteurs (FI) stockés et correspondant à la période qui correspond à l'intervalle de temps de transmission contiennent l'indication par défaut, ou sinon contiennent l'indication d'état libre, ou bien contiennent l'indication d'état occupé et un identificateur de source qui identifie le noeud donné.

7. Procédé d'accès selon la revendication 6, dans lequel ladite étape de transmission d'une sous-trame spécifique comprend d'introduire un identificateur de priorité dans chaque champ du vecteur (FI) inclus dans ladite sous-trame spécifique.

8. Procédé d'accès selon la revendication 7, dans lequel ladite étape de sélection d'un nombre d'intervalles de temps d'accès comprend, dans le cas où aucun intervalle de temps sélectionné à partir dudit nombre d'intervalles de temps postérieur au dit second nombre d'intervalles de temps, ne respecte ledit second critère, de sélectionner un seul intervalle de temps d'accès à partir dudit nombre d'intervalles de temps postérieur au dit second nombre d'intervalles de temps selon les identificateurs de priorité introduits dans les champs des vecteurs stockés (FI) .

9. Procédé d'accès selon la revendication 8, dans lequel ladite étape d'introduction d'un identificateur de source comprend, pour chaque sous-trame unique transmise, les étapes comprenant le fait de :
- introduire, dans le champ du vecteur (FI) inclus dans la sous-trame unique transmise et correspondant à la période qui correspond à l'intervalle de temps de transmission de la seule sous-trame, une première étiquette respective associée au noeud donné et à ladite sous-trame unique transmise ;
- introduire dans les autres champs du vecteur (FI) inclus dans la sous-trame unique transmise, des secondes étiquettes respectives, lesquelles sont fonction des premières étiquettes contenues dans les sous-trames reçues précédemment par le noeud donné et d'une information contenue dans lesdites sous-trames reçues antérieurement.

10. Noeud destiné à un réseau de communication mobile, configuré pour mettre en oeuvre l'ensemble des étapes du procédé d'accès selon l'une quelconque des revendications précédentes.

11. Réseau de communication mobile comprenant au moins un noeud selon la revendication 10.

12. Réseau de communication mobile selon la revendication 11, **caractérisé en ce qu'**il est d'un type de réseau sans fil.

13. Produit logiciel qui peut être chargé dans une mémoire d'un noeud d'un réseau de communication et qui est configuré pour mettre en oeuvre, lorsqu'il fonctionne, l'ensemble des étapes du procédé d'accès selon l'une quelconque des revendications 1 à 9.
